# EUROPÄISCHE PATENTSCHRIFT

(11) **EP 2 338 777 B1**
(45) Veröffentlichungstag und Bekanntmachung des Hinweises auf die Patenterteilung: **14.11.2012**
(21) Anmeldenummer: 10195779.3
(22) Anmeldetag: 17.12.2010
(51) Int. Cl.: B62K 25/04, B62K 25/08, B62K 25/28, F16F 9/06, F16F 9/504

(54) **Hydropneumatisches Federbein für ein Fahrrad**
Hydropneumatic suspension strut for a bicycle
Jambe de suspension à force hydropneumatique pour un vélo

(30) Priorität: 18.12.2009 DE 102009058847
(43) Veröffentlichungstag der Anmeldung: 29.06.2011
(73) Patentinhaber: Ripa, Thomas, 82211 Herrsching (DE)
(72) Erfinder: Ripa, Thomas, 82211 Herrsching (DE)
(74) Vertreter: Fischer, Ernst

(56) Entgegenhaltungen:
- EP-A2- 0 723 090
- EP-A2- 2 128 481
- WO-A1-01/85531
- WO-A1-2006/054994
- DE-A1- 19 737 293
- DE-A1-102005 062 433
- US-A1- 2007 119 670
- US-A1- 2009 236 807

## Beschreibung

Die Erfindung betrifft ein hydropneumatisches Federbein für ein Fahrrad.

Ein hydropneumatisches Federbein für ein Fahrrad oder andere Landfahrzeuge ist bekannt als eine Kombination aus einem hydraulischen Dämpfer und einer Federung, die beispielsweise eine pneumatische Federung sein kann. Ein mit dem Federbein gefedertes Fahrrad, wie beispielsweise ein Trekkingrad oder ein Moutainbike, weist eine Vorder- und/oder Hinterradfederung auf. Für die Federungen ist es bekannt das hydropneumatische Federbein vorzusehen, das für den hydraulischen Dämpfer beispielsweise einen Einrohrdämpfer und für die pneumatische Feder beispielsweise eine Luftdruckkammerfeder aufweist. Der Einrohrdämpfer weist eine mit einem Dämpferfluid gefüllte Arbeitskammer und eine gasgefüllte Gegendruckkammer auf, mit der via einen Trennkolben ein Volumen- und Temperaturausgleich des Dämpferfluids ausgleichbar ist. In der Luftdruckkammerfeder ist ein gasgefüllter Federzylinder mit einem Federkolben vorgesehen, der gegen das Gaspolster vorgespannt ist.

Die Kennlinie der pneumatischen Feder ist in der Regel stark progressiv. Wünschenswert ist es allerdings, eine Federung mit einer Kennlinie einzusetzen, die über einen weiten Bereich möglichst linear ist und gegebenenfalls erst bei starker Einfederung progressiven Charakter hat. Zumindest teilweise Abhilfe könnte das Vorsehen einer Schraubenfeder beispielsweise aus Stahl schaffen, die eine lineare Kennlinie hat. Jedoch hat die Stahlschraubenfeder ein hohes Gewicht und eine begrenzte Einstellbarkeit, was insbesondere beim Einsatz der Stahlschraubenfeder in dem Fahrrad nachteilig ist.

Dokument EP 2 128 481 A2 offenbart ein hydropneumatisches Federbein für ein Fahrrad gemäß dem Oberbegriff von Anspruch 1.

Aufgabe der Erfindung ist es, ein hydropneumatisches Federbein für ein Fahrrad zu schaffen, wobei das Federbein ein geringes Gewicht und in weiten Bereichen eine möglichst lineare Kennlinie hat.

Das erfindungsgemäße hydropneumatische Federbein für ein Fahrrad weist einen Stoßdämpfer, eine Gasdruckfeder und einen Ausgleichsbehälter mit einer Ausgleichskammer auf. Der Stoßdämpfer weist einen mit einem inkompressiblen Dämpferfluid gefüllten Dämpferzylinder, einen in diesem verschiebbar angeordneten Dämpferkolben und eine Dämpferkolbenstange auf, mit der der Dämpferkolben von außerhalb des Dämpferzylinders betätigbar ist. Die Gasdruckfeder weist einen mit einem kompressiblen Federfluid gefüllten Federzylinder sowie einen in diesem verschiebbar angeordneten Federkolben auf, wobei der Stoßdämpfer und die Gasdruckfeder parallel zueinander geschaltet sind und beim Einfedern und Ausfedern des Federbeins der Stoßdämpfer und die Gasdruckfeder teleskopartig ineinander verfahrbar sind. Der Ausgleichsbehälter ist mit dem Dämpferzylinder dämpferfluidleitend verbunden und zum Volumenausgleich von einer zeitlich variablen Verdrängung des Dämpferfluids durch die Dämpferkolbenstange beim Einfedern und Ausfedern des Dämpferbeins vorgesehen. Die Ausgleichskammer ist mit einem verschiebbaren Trennelement abgegrenzt, mit dem durch dessen Verschiebung der Volumenausgleich bewerkstelligbar ist. Ferner weist das hydropneumatische Federbein eine mit dem Federfluid gefüllte Federzusatzkammer, eine Schalteinrichtung und eine Kupplung auf, mit der die Schalteinrichtung mit dem Trennelement gekuppelt ist, dass, wenn das Trennelement in einem Lagebereich zwischen einer ersten vorbestimmten Lage und einer zweiten vorbestimmten Lage angeordnet ist, die Federzusatzkammer mit dem Federzylinder federfluidleitend verbunden ist und, wenn das Trennelement außerhalb des Lagebereichs angeordnet, die Federzusatzkammer von dem Federzylinder federfluidisoliert ist.

Durch die Lage des Trennelements ist der Einfederweg des Federbeins repräsentiert, so dass der Lagebereich mit seiner ersten vorbestimmten Lage und seiner zweiten vorbestimmten Lage mit einem Einfederwegbereich korreliert. Die erste vorbestimmte Lage kann einem minimalen Einfederweg (Einfederweg = Null) und/oder die zweite vorbestimmte Lage kann einem maximalen Einfederweg, bei dem das Federbein maximal möglich eingefedert ist, entsprechen. In Abhängigkeit der definierten ersten vorbestimmten Lage und der definierten zweiten vorbestimmten Lage ist mittels der Schalteinrichtung, die via die Kupplung mit dem Trennelement gekoppelt ist, eine Verknüpfung zwischen dem momentan vorliegenden Federweg des Federbeins und der federfluidleitenden Verbindung zwischen der Federzusatzkammer und der Gasdruckfeder hergestellt.

Ist die Federzusatzkammer mit der Gasdruckfeder federfluidleitend verbunden, ist das Volumen des in der Gasdruckfeder sich befindlichen Federfluids um das Volumen des in der Federzusatzkammer sich befindlichen Federfluids erhöht. Durch diese Volumenvergrößerung ist das beim Einfedern des Federbeins zu komprimierende Federfluidvolumen ebenfalls vergrößert, so dass die Kennlinie der Gasdruckfeder entsprechend dem Volumenzuwachs hervorgerufen durch das Zuschalten der Federzusatzkammer mit der Schalteinrichtung flacher ist. Ist im Gegensatz dazu die Federzusatzkammer von der Gasdruckfeder federfluidisoliert, ist lediglich beim Einfedern des Federbeins das Volumen der Gasdruckfeder wirksam, so dass hierbei die Kennlinie des Federbeins entsprechend steil ist. Somit kann durch ein gezieltes Vorbestimmen der ersten und der zweiten Lage des Trennelements ein Einfederbereich des Federbeins vorgegeben sein, der sich dadurch auszeichnet, dass in diesem Bereich die Kennlinie des Federbeins flacher ist verglichen mit einem herkömmlichen Federbein, bei dem über den gesamten Federbereich eine erfindungsgemäße Federzusatzkammer nicht einer Gasdruckfeder zuschaltbar ist.

Die erste vorbestimmte Lage und die zweite vorbestimmte Lage können derart definiert sein, dass bei leichtem Einfedern des Federbeins von dem Trennelement die erste vorbestimmte Lage noch nicht erreicht ist, so dass die Federzusatzkammer von der Gasdruckfeder federfluidisoliert ist. In diesem Bereich ist die Kennlinie des Federbeins ausreichend steil und im Wesentlichen linear. Befindet sich eine momentane Lage des Trennelements in dem Bereich zwischen der ersten vorbestimmten Lage und der zweiten vorbestimmten Lage, so ist die Federzusatzkammer mit der Gasdruckfeder federfluidleitend verbunden, wodurch in diesem Bereich die Kennlinie des Federbeins hinsichtlich ihrer Steilheit und Linearität im Wesentlichen konstant ist. Dadurch hat das Federbein im Bereich zwischen dem minimalen Einfederweg und dem Einfederweg, der der zweiten vorbestimmten Lage entspricht, eine ausreichend steile und im Wesentlichen lineare Kennlinie. Die zweite vorbestimmte Lage ist so definiert, dass, wenn der Trennkolben diese zweite vorbestimmte Lage erreicht hat, der Einfederweg des Federbeins derart groß ist, dass eine steile Kennlinie des Federbeins wünschenswert ist, um ein eventuell schädliches Erreichen des maximal möglichen Einfederwegs des Federbeins zu vermeiden. Hierfür ist nach Erreichen der zweiten vorbestimmten Lage des Trennelements die Federzusatzkammer wieder von der Gasdruckfeder federfluidisoliert, wobei die Kennlinie des Federbeins einen stark progressiven und somit steilen Verlauf hat. Dadurch ist die Kennlinie des Federbeins durch das entsprechende Vorbestimmen der ersten und der zweiten Lage modelliert, wobei bei einem Federweg bis zur zweiten vorbestimmten Lage die Kennlinie ausreichend steil und im Wesentlichen linear ist und nach Erreichen der zweiten vorbestimmten Lage eine hohe Steilheit hat.

Die Konstruktion des erfindungsgemäßen Federbeins mit der Gasdruckfeder und der Federzusatzkammer ist in ihrer Struktur einfach. Dadurch weist das erfindungsgemäße Federbein nur wenige Bauteile auf, wodurch das erfindungsgemäße Federbein eine einfache und zuverlässige Konstruktion hat sowie leicht ist. Durch den Einsatz des Trennelementes mit seinem zum Federkolben korrelierenden, aber wesentlich kürzeren Hubweg als Indikator für den Hubzustand des Federbeins ist es ermöglicht, die Schalteinrichtung baulich möglichst kurz auszuführen und dadurch zusätzlich bauraumsparend in den Ausgleichszylinder zu integrieren. Im Gegensatz dazu würde beispielsweise bei einer Konstruktion, bei der die Schalteinrichtung direkt vom Federkolben betätigt ist, die Schalteinrichtung wesentlich länger sein und dadurch mehr Bauraum einnehmen müssen. Die Schalteinrichtung könnte nicht ausschließlich im Federzylinder untergebracht werden, da dieser vom Federkolben während eines Arbeitshubes des Federbeins nahezu vollständig überstrichen wird und somit kein Bauraum für die Schalteinrichtung zur Verfügung steht.

Bevorzugtermaßen weist der Ausgleichsbehälter neben der Ausgleichskammer eine mit dem Federfluid gefüllte Druckkammer auf, die die Federzusatzkammer bildet und von der Ausgleichskammer mit dem Trennelement in dem Ausgleichsbehälter abgetrennt ist. Dadurch hat vorteilhaft die Ausgleichskammer eine Doppelfunktion, da die Ausgleichskammer zusätzlich die Federzusatzkammer bildet. Somit braucht vorteilhaft für das Federbein keine zusätzliche Federzusatzkammer vorgesehen werden, wodurch das Federbein einfach und kompakt im Aufbau ist.

Die Schalteinrichtung weist bevorzugt ein Auf-Zu-Ventil, mit dem die Federzusatzkammer von der Gasdruckfeder in der Zu-Stellung federfluidisolierbar ist, und eine das Auf-Zu-Ventil umgebende Umgehungsleitung mit einem Rückschlagventil auf, dessen Durchlassrichtung in Strömungsrichtung von der Federzusatzkammer zu der Gasdruckfeder ist. Mit dem Auf-Zu-Ventil in der Zu-Stellung ist eine federfluidleitende Verbindung zwischen der Gasdruckkammer und der Zusatzkammer via das Rückschlagventil nur möglich, wenn der Druck des Federfluids in der Federzusatzkammer höher ist als der Druck des Federfluids in der Gasdruckfeder. Damit ist das Rückschlagventil auf Durchfluss geschaltet und zwischen der Federzusatzkammer und der Gasdruckfeder kann ein Druckausgleich stattfinden. Ist das Federbein vollständig ausgefedert, so ist der Druck in der Federzusatzkammer höher als in der Gasdruckfeder. Beim Einfedern des Federbeins erhöht sich der Druck in der Gasdruckfeder und erreicht schließlich den Druck in der Federzusatzkammer. Ist das Auf-Zu-Ventil in der Zu-Stellung und ist die Lage des Trennelements zwischen der ersten vorbestimmten Lage und der zweiten vorbestimmten Lage, so kann via das Rückschlagventil ein Druckausgleich von der Federzusatzkammer zu der Gasdruckfeder erfolgen. Dadurch wird vorteilhaft unterbunden, dass sich beim Betrieb des Federbeins der Druck des Federfluids in der Gasdruckfeder kontinuierlich erniedrigt, beispielsweise hervorgerufen durch eine Leckage von dem Federfluid aus der Gasdruckfeder. Des weiteren wird durch die Anordnung des Rückschlagventil erreicht, dass selbst beim Schließen des Auf-Zu-Ventils während das Trennelement bereits in dem Lagebereich zwischen der ersten vorbestimmten Lage und der zweiten vorbestimmten Lage angeordnet ist und somit die Federzusatzkammer mit der Gasdruckfeder federfluidleitend verbunden ist, die Gasdruckfeder und die Federzusatzkammer in ihre ursprünglichen Gasdruckniveaus zurückkehren können (Einfederweg = Null) und bei einem erneuten Hubvorgang des Federbeins jetzt durch das immer noch geschlossene Auf-Zu-Ventil in jedem Einfederungszustand des Federbeins federfluiddicht getrennt bleiben. Dies ist der Fall, während das Federbein durch Ausfederung in seine Ausgangslage zurückkehrt, gesteuert durch die Schalteinrichtung und ermöglicht durch die in diese Richtung orientierte Durchlassrichtung des Rückschlagventils.

Es ist bevorzugt, dass die Kupplung einen Positionssensor zum Erfassen der momentanen Lage des Trennelements und einen von dem Positionssensor angesteuerten Aktuator aufweist, mit dem die Schalteinrichtung antreibbar ist. Bevorzugt ist zwischen dem Positionssensor und dem Aktuator eine Signalverarbeitungseinheit geschaltet. Die Signalverarbeitungseinheit ermöglich es dem Benutzer entweder direkt die Verbindungszustände zwischen der Gasdruckfeder und den Federzusatzkammern abhängig vom durch den Positionssensor ermittelten Hub des Trennelementes und damit dem Einfederungszustand des Federbeins zu verschieben oder in ihrer Länge zu verändern und damit die Signalverarbeitungseinheit zu programmieren oder über ein externes Bediengerät mit grafischer Benutzeroberfläche (beispielsweise einem PC oder einem Smartphone), beispielsweise durch Manipulation der auf dieser Benutzeroberfläche grafisch dargestellten Federkennlinie des Federbeins, einzugeben und anschließend diese so auf dem externen Bediengerät erzeugten hubabhängigen Schaltinformationen für den Aktuator via einen Interface auf die Signalverarbeitungseinheit zu überspielen und die Singnalverarbeitungseinheit so zu programmieren. Ferner kann an die Signalverarbeitungseinheit ein Temperatursensor angeschlossen sein, der die Temperatur des Dämpferfluides misst, so dass die Signalverarbeitungseinheit durch Einstellen einer Startlänge des Aktuators die von der Dämpfungsarbeit des Stossdämpfers herrührende Temperaturänderung und die damit einhergehende Volumenänderung des Dämpferfluides und somit die Veränderung der Schaltzeitpunkte der Schalteinrichtung kompensiert oder über den Temperatursensor und/oder den Positionssensor einen bestimmten Betriebszustand wie z.B. eine langsame Bergauffahrt mit niedriger Einfederungsfrequenz des Federbeines oder schnelle Bergabfahrt mit entsprechend hoher Einfederungsfrequenz des Federbeines erkennt und diesem Betriebszustand bestimmte hubabhängige Schaltzeitpunkte der Schalteinrichtung zuordnet.

Alternativ ist es bevorzugt, dass die Kupplung ein starres, an dem Trennelement befestigtes Verbindungselement zum starren Kuppeln der Schalteinrichtung mit dem Trennelement ist. Dadurch ist das Trennelement direkt mit der Schalteinrichtung gekuppelt, wodurch von dem Trennelement die Schalteinrichtung direkt betrieben ist. Bevorzugt sind der Federbeinzylinder, die Federzusatzkammer und die Druckkammer konzentrisch und/oder hintereinander liegend angeordnet. Bevorzugt kann die Kupplung derartig gestaltet sein, dass sie durch ihre Länge, Ausrichtung zwischen dem Trennelement und der Schalteinrichtung, durch ihre Benetzung durch das Dämpferfluid und durch den Temperaturausdehnungskoeffizienten ihres Materials, die vom Stossdämpfer durch Verrichtung von Dämpfungsarbeit verursachte Temperaturänderung und damit Volumenausdehnung des Dämpferfluides und die auf diese Weise entstehende Veränderung der Schaltzeitpunkte der Schalteinrichtung kompensiert. Auch der gegenteilige Effekt kann vorteilhaft genutzt werden, so dass ein zunehmendes Erwärmen des Dämpferfluides durch die vom Stossdämpfer verrichtete Dämpfungsarbeit dazu führt, die Schaltzeitpunkte der Schalteinrichtung gesteuert zu verschieben, um die Federkennlinie des Federbeins dem momentanen Betriebszustand anzupassen. Dieser Effekt kann quantitativ durch Länge, Ausrichtung zwischen dem Trennelement und der Schalteinrichtung, durch Benetzung durch das Dämpferfluid und durch den Temperaturausdehnungskoeffizienten des Materials der erfindungsgemäßen Kupplung gesteuert werden.

Die Schalteinrichtung ist bevorzugt ein Schieber mit einer Schieberöffnung, die einen ersten Öffnungsrand und einen zweiten Öffnungsrand aufweist, deren Positionen den Lagebereich definieren, wobei mit der freigelegten Schieberöffnung die Federzusatzkammer mit der Gasdruckfeder federfluidleitend verbunden ist und mit der überdeckten Schieberöffnung die Federzusatzkammer von der Gasdruckfeder federfluidisoliert ist. Der Ausgleichsbehälter ist bevorzugt ein Ausgleichszylinder und das Trennelement ist bevorzugt ein Trennkolben, der in dem Ausgleichszylinder verschiebbar schwimmend gelagert ist. Ferner ist es bevorzugt, dass die Kupplung ein hohlzylindrischer Kranz ist, der konzentrisch an dem Trennkolben befestigt ist und in die Ausgleichskammer sich erstreckt, wobei in der Ausgleichskammer ein Gleitzylinder vorgesehen ist, der konzentrisch um den Kranz angeordnet ist, der in Längsrichtung des Trennkolbens an dem Gleitzylinder federfluiddicht anliegend längsverschiebbar ist, so dass in dem Ausgleichszylinder die Ausgleichskammer ringförmig um dem Kranz und dem Gleitzylinder ausgebildet ist. Der Trennkolben weist dabei bevorzugt mittig einen Längsdurchgang auf und der Innenraum des Gleitzylinders ist bevorzugt mit der Gasdruckfeder fluidleitend verbunden, so dass die Druckkammer mit der Gasdruckfeder via den Kranz und den Gleitzylinder federfluidleitend verbunden ist.

Bevorzugtermaßen weist die Schalteinrichtung einen Stab, an dem als die Schieberöffnung eine umlaufende Rille angebracht ist, die axial gesehen von einer den ersten Schieberöffnungsgrad bildenden ersten Rillenkante und einer den zweiten Schieberöffnungsgrad bildenden zweiten Rillenkante begrenzt ist, und das dem Trennkolben abgewandte Ende des Kranzes eine umlaufende Wulst auf, die, wenn aufgrund einer momentanen Lage des Trennkolbens die Wulst außerhalb der Rille angeordnet ist, radial federfluiddicht an dem Stab anliegt und, wenn aufgrund einer momentanen Lage des Trennkolbens die Wulst an der Rille angeordnet ist, von dem Stab im Radialabstand angeordnet ist, so dass die Wulst mit der Rille derart zusammenwirkt, dass von den Rillenkanten der Lagebereich definiert ist. Ferner ist bevorzugt der Stab längsverschiebbar, wodurch der Lagebereich durch die gewählte Position des Stabs einstellbar ist. Alternativ weist bevorzugt die Schalteinrichtung eine Hülse, an der innenseitig eine umlaufende Stufe ausgebildet ist, die axial gesehen den zweiten Schieberöffnungsrand bildet, wodurch die Hülse verjüngt ist, und das dem Trennkolben abgewandte Ende des Kranzes eine umlaufende Wulst auf, die, wenn aufgrund der momentanen Lage des Trennkolbens die Wulst diesseits der Stufe angeordnet ist, radial federfluiddicht an der Hülse anliegt und, wenn aufgrund einer momentanen Lage des Trennkolbens die Wulst jenseits der Stufe angeordnet ist, von der Hülse im Radialabstand angeordnet ist, so dass die Wulst mit der Hülse derart zusammenwirkt, dass von der Stufe der Lagebereich definiert ist.

Der Federzylinder ist bevorzugt von dem Federkolben in eine Negativkammer und eine Hauptkammer geteilt, die mit der Federzusatzkammer via die Schalteinrichtung federfluidleitend verbunden ist. Ferner ist es bevorzugt, dass der Dämpferzylinder von dem Dämpferkolben in eine Gegenkammer und eine Arbeitskammer geteilt ist, die mit dem Ausgleichsbehälter federfluidleitend verbunden ist. Hierbei ist es bevorzugt, dass der Dämpferkolben ein Dämpferkolbenrückschlagventil aufweist, das beim Einfedern des Federbeins in Offenstellung und beim Ausfedern des Federbeins in Geschlossenstellung gebracht ist. Ferner ist es bevorzugt, dass der Dämpferzylinder an der Verbindung der Arbeitskammer zum Ausgleichsbehälter ein Ausgleichsrückschlagventil aufweist, das beim Einfedern des Federbeins in der Geschlossenstellung und beim Ausfedern des Federbeins in Offenstellung gebracht ist. Mit dem Dämpferkolbenrückschlagventil und/oder dem Ausgleichsrückschlagventil kann es vorteilhaft bewirkt werden, dass bei schneller Betätigung des Federbeins Kavitation in dem Dämpferfluid unterbunden wird. Die Kavitation in dem Dämpferfluid ist insbesondere dann schädlich, wenn durch das Entstehen von Gasblasen in dem Dämpferfluid zu viel Volumen des Dämpferfluids in den Ausgleichsbehälter transportiert wird, woraus eine Fehlschaltung der Steuereinrichtung aufgrund der Kupplung zwischen dem Trennelement und der Steuereinrichtung die Folge ist.

Im Folgenden werden bevorzugte Ausführungsformen eines erfindungsgemäßen Federbeins anhand der beigefügten schematischen Zeichnungen erläutert. Es zeigen:
Figuren 1 bis 3 schematische Darstellungen von erfindungsgemäßen Ausführungsformen des Federbeins,
Figuren 4 bis 6 ein Querschnitt der Ausführungsform des Federbeins gemäß dem Schema aus Figur 2, wobei die Ausführungsform für das hintere Laufrad eines Fahrrads geeignet ist und in Figur 4 das Federbein als ausgefedert, in Figur 5 das Federbein als in einer mittleren Einfederstellung und in Figur 6 das Federbein als vollständig eingefedert dargestellt sind,
Figur 7 eine Schalteinrichtung der Ausführungsform aus Figur 5,
Figur 8 eine alternative Schalteinrichtung,
Figur 9 Kennlinien der Ausführungsformen,
Figur 10 eine weitere Ausführungsform des Federbeins, die für ein vorderes Laufrad eines Fahrrads geeignet ist,
Figur 11 Detail I aus Figur 10 und
Figur 12 Detail II aus Figur 10.

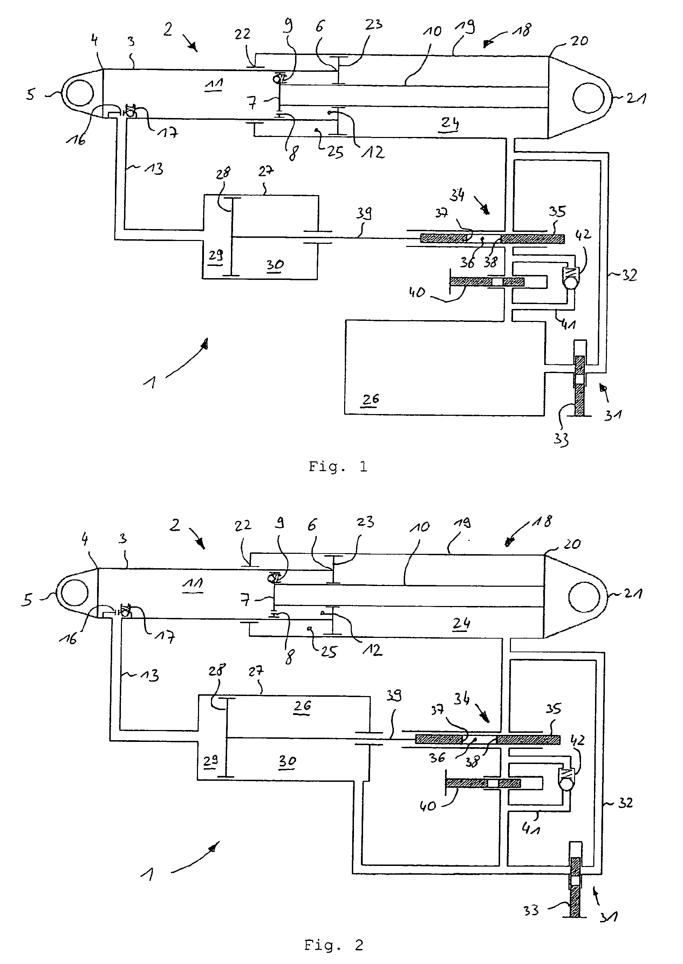

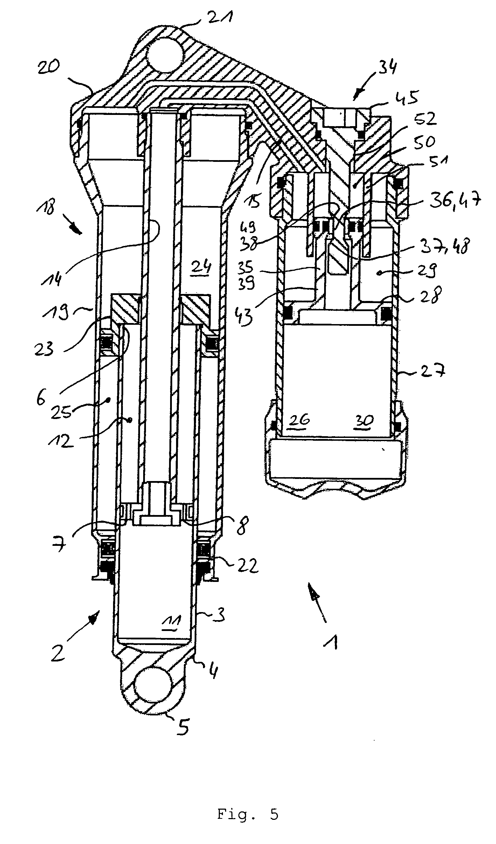

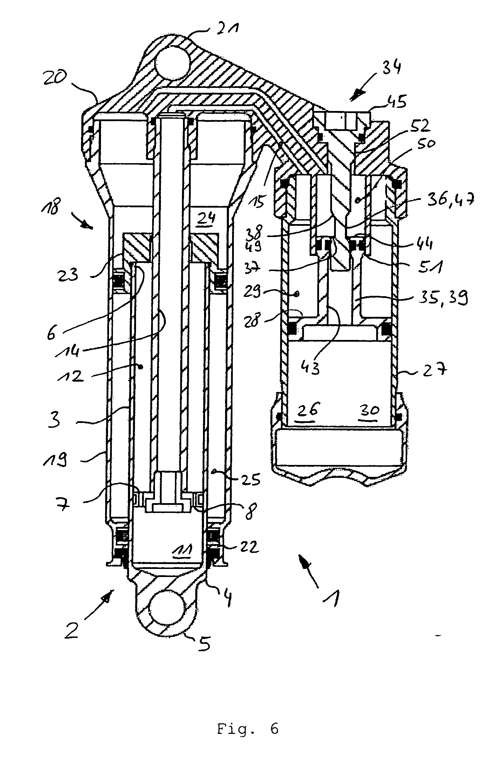

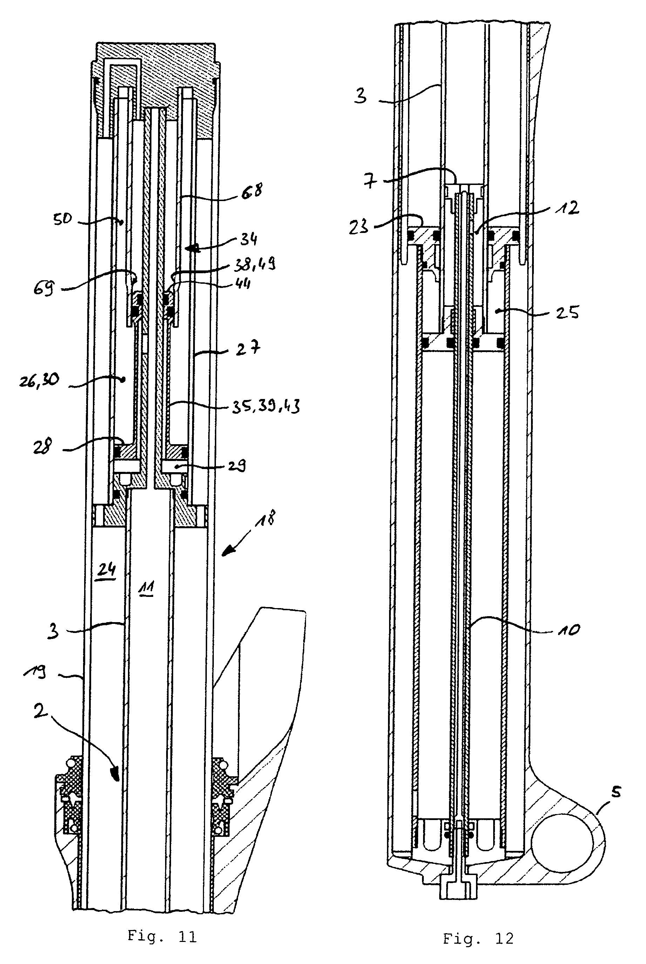

Wie es in Figuren 1 bis 12 zu sehen ist, weist ein hydropneumatisches Federbein 1 einen Stoßdämpfer 2 mit einem Dämpferzylinder 3 auf, der an einem Dämpferzylinderkopf 4 ein Laufradauge 5 aufweist, an das beispielsweise das hintere Laufrad eines Fahrrads koppelbar ist. An dem dem Dämpferzylinderkopf 4 abgewandten Längsende des Dämpferzylinder 3 ist ein Dämpferzylinderrand 6 ausgebildet. Der Dämpferzylinder 3 ist mit einem Dämpferfluid gefüllt, wobei in dem Dämpferzylinder 3 ein Dämpferkolben 7 längsverschiebbar in dem Dämpferfluid gelagert ist. Der Dämpferkolben 7 weist einen Durchlass 8 auf, so dass beim Verschieben des Dämpferkolbens 7 in dem Dämpferzylinder 3 das Dämpferfluid durch den Durchlass 8 verdrängt wird. Beim Durchströmen des Dämpferfluids durch den Durchlass 8 entsteht in Abhängigkeit der Geschwindigkeit des Dämpferkolbens 7 eine Widerstandskraft, die als Dämpfungskraft des Federbeins 1 wirken kann. An dem Dämpferkolben 7 und parallel zu dem Durchlass 8 geschaltet ist ein Dämpferkolbenrückschlagventil 9 vorgesehen, das beim Einfedern des Federbeins 1 in Offenstellung und beim Ausfedern des Federbeins 1 in Geschlossenstellung gebracht ist.

Der Dämpferkolben 7 weist eine Dämpferkolbenstange 10 auf, mit der der Dämpferkolben 7 via den Dämpferzylinderrand 6 von außerhalb des Dämpferzylinders 3 betätigbar ist. Von dem Dämpferkolben 7 wird der Innenraum des Dämpferzylinders 3 in eine der Dämpferkolbenstange 10 abgewandte Arbeitskammer 11 und eine der Dämpferkolbenstange 10 zugewandte Gegenkammer 12 geteilt. Beim Einfahren des Dämpferkolbens 7 in den Dämpferzylinder 3 wird der Anteil der Dämpferkolbenstange 10, der sich in dem Dämpferzylinder 3 befindet, erhöht, wodurch von der Dämpferkolbenstange 10 Dämpferfluid verdrängt wird.

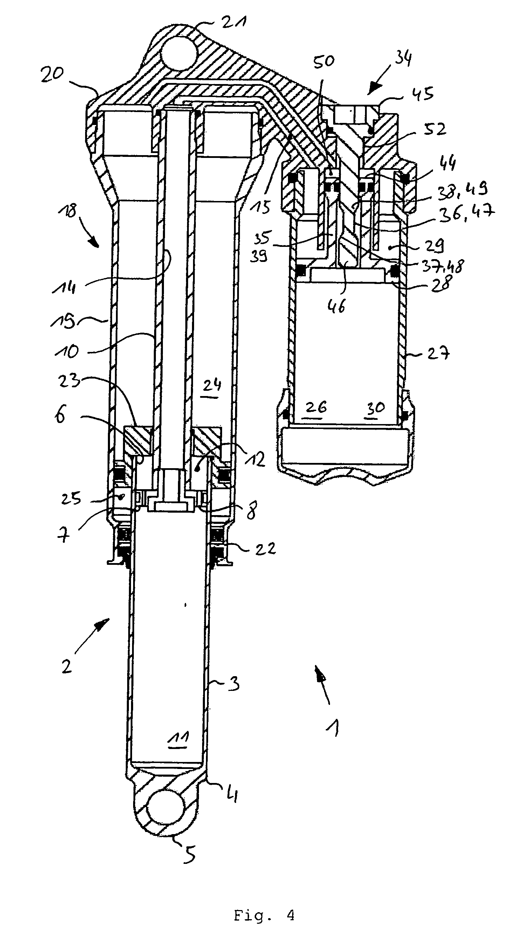

An die Arbeitskammer 11 angeschlossen ist eine Ausgleichsleitung 13 an dem Dämpferzylinder 3 vorgesehen, durch die von der Dämpferkolbenstange 10 verdrängtes Dämpferfluid abfließen kann. Wie es in Figuren 4 bis 6 gezeigt ist, ist die Dämpferkolbenstange 10 als ein Dämpferkolbenstangenrohr 14 ausgebildet, wobei die Ausgleichsleitung 13 von dem Dämpferkolbenstangenrohr 14 und einem Ausgleichskanal 15 gebildet ist. An der Mündung der Ausgleichsleitung 13 in die Arbeitskammer 11 ist eine Ausgleichsblende 16 vorgesehen, mit der der Strömungswiderstand des Dämpferfluids durch die Ausgleichsleitung 13 definiert ist. Die Ausgleichsblende 16 ist in Figuren 4 bis 6 von dem Ausgleichskanal 15 gebildet. Dadurch, dass die Ausgleichsblende 16 bzw. der Ausgleichskanal 15 eine Engstelle beim Durchströmen des Dämpferfluids durch die Ausgleichsleitung 13 bildet, geht von der Ausgleichsblende 16 bzw. dem Ausgleichskanal 15 eine Dämpfungswirkung für das Federbein 1 aus. An der Ausgleichsblende 16 ist ein Ausgleichsrückschlagventil 17 angebaut, das beim Einfedern des Federbeins 1 in Geschlossenstellung und beim Ausfedern des Federbeins 1 in Offenstellung gebracht ist.

Ferner weist das Federbein 1 eine Gasdruckfeder 18 mit einem Federzylinder 19 auf, dessen Ende von einem Federzylinderkopf 20 gebildet ist. An dem Federzylinderkopf 20 ist ein Rahmenauge 21 vorgesehen, an das ein Rahmen des Fahrrads montierbar ist. Ferner ist in dem Federzylinderkopf 20 der Ausgleichskanal 15 ausgebildet. Der Federzylinder 19 weist an seinem dem Federzylinderkopf 20 abgewandten Ende eine Federzylinderabdichtung 22 auf, durch die der Dämpferzylinder 3 geführt ist. An dem Dämpferzylinderrand 6 ist ein Federkolben 23 angebracht, der in dem Federzylinderkopf 20 längsverschiebbar angeordnet ist. Gemäß den Figuren 1 bis 6 ist die Kolbenstange 10 an dem Federzylinderkopf 20 befestigt und durch den Federkolben 23 durchgeführt, so dass der Dämpferkolben 7 von dem Rahmenauge 21 via die Dämpferkolbenstange 10 betätigbar ist. Ferner ist der Federkolben 23 von dem Laufradauge 5 via den Dämpferzylinder 3 betätigbar, so dass der Stoßdämpfer 2 und die Gasdruckfeder 18 beim Ein- und Ausfedern des Federbeins 1 teleskopartig ineinander verschiebbar sind.

Der Federzylinder 19 ist mit Federfluid gefüllt, wobei von dem Federkolben 23 der Federzylinder 19 in eine Hauptkammer 24 und eine Negativkammer 25 geteilt ist. Beim Einfedern des Federbeins 1 wird der Federkolben 23 in den Federzylinder 19 hineinbewegt, so dass das Volumen der Hauptkammer 24 sich verkleinert und das Volumen der Negativkammer 25 sich vergrößert. Durch die Kompressibilität des Federfluids wirkt das von dem Federkolben 23 in der Hauptkammer 24 und der Negativkammer 25 beaufschlagte Federfluid federnd, so dass zwischen dem Laufradauge 5 und dem Rahmenauge 21 von der Gasdruckfeder 18 eine federnde und von dem Stoßdämpfer 2 eine dämpfende Kopplung erzielt ist.

Das Federbein 1 weist außerdem eine Federzusatzkammer 26 auf, die wahlweise zu der Hauptkammer 24 zuschaltbar ist. Ist die Federzusatzkammer 26 mit der Hauptkammer 24 verbunden, so hat das beim Einfedern des Federbeins 1 zusammengedrückte Federfluid ein Volumen, das von der Hauptkammer 24 und der Federzusatzkammer 26 definiert ist. Ist die Federzusatzkammer 26 von der Hauptkammer 24 federfluiddicht isoliert, so ist das Volumen der Federzusatzkammer 26 für die Gasdruckfeder 18 unwirksam. Das Federbein 1 weist einen Ausgleichszylinder 27 auf, in dem ein Trennkolben 28 verschiebbar schwimmend angeordnet ist, wobei von dem Trennkolben 28 der Ausgleichszylinder 27 in eine Ausgleichskammer 29 und eine Druckkammer 30 unterteilt ist. In die Ausgleichskammer 29 ist die Ausgleichsleitung 13 geführt, wobei die Ausgleichskammer 29 von dem Dämpferfluid gefüllt ist. Die Druckkammer 30 ist mit Gas gefüllt.

In der in Figuren 2, 4 bis 6 gezeigten Ausführungsform ist die Druckkammer 30 die Federzusatzkammer 26, wobei die Druckkammer 30 mit dem Federfluid gefüllt ist. Gemäß Figuren 4 bis 6 ist die Druckkammer 30 des Ausgleichszylinders 27 mit einer Kappe verschlossen, die längsverschiebbar an dem Ausgleichszylinder 29 montierbar ist, wodurch das Volumen der Druckkammer 30 und somit das Volumen der Federzusatzkammer 26 variierbar und somit einstellbar ist.

Zwischen der Hauptkammer 24 und der Federzusatzkammer 26 ist eine erste Verbindungsleitung 32 vorgesehen, in der ein erstes manuell betätigbares Auf-Zu-Ventil 33 eingebaut ist. Dadurch ist die Federzusatzkammer 26 mit der Hauptkammer 24 unter Betätigung des ersten Auf-Zu-Ventils 23 federfluidleitend verbindbar. Ferner weist das Federbein 1 eine automatische Schalteinrichtung 34 auf, die parallel zu der ersten Verbindungsleitung 32 und dem ersten Auf-Zu-Ventil 33 geschaltet ist. Die automatische Schalteinrichtung 34 weist einen Schieber 35 auf, der eine Schieberöffnung 36 hat, die von einem ersten Schieberöffnungsrand 37 und einem zweiten Schieberöffnungsrand 38 gebildet ist. Der Schieber 35 ist mittels einer Schieberkupplung 39 mit dem Trennkolben 28 gekuppelt und dadurch betätigbar. Gemäß Figuren 1, 2, 4 bis 6 ist die Schieberkupplung 39 eine starre Verbindung zwischen dem Trennkolben 28 und dem Schieber 35.

Zwischen der Federzusatzkammer 26 und dem Schieber 35 ist ein zweites Auf-Zu-Ventil 40 geschaltet, mit dem die federfluidleitende Verbindung zwischen dem Schieber 35 und der Federzusatzkammer 26 wahlweise federfluiddicht trennbar ist. Um das zweite Auf-Zu-Ventil 40 ist eine Umgehungsleitung 41 geführt, die ein Rückschlagventil 42 aufweist, dessen Durchflussrichtung von der Federzusatzkammer 26 zu der Hauptkammer 24 ist.

Von dem ersten Schieberöffnungsrand 37 ist eine zweite Lage des Trennkolbens 28 und von dem zweiten Schieberöffnungsrand 38 ist eine erste Lage des Trennkolbens 28 repräsentiert. Ist der Trennkolben 28 in der ersten vordefinierten Lage, so ist via die Schieberkupplung 39 der Schieber 35 derart positioniert, dass durch das Wirken des zweiten Schieberöffnungsrands 38 die Schieberöffnung 36 freigeschaltet ist. Ferner, wenn sich der Trennkolben 28 in der zweiten vordefinierten Lage befindet, ist durch die Kopplung des Schiebers 35 mit dem Trennkolben 28 mittels der Schieberkupplung 39 der Schieber 35 derart positioniert, dass durch das Wirken des ersten Schieberöffnungsrands 37 die Schieberöffnung 36 freigeschaltet ist. Befindet sich der Trennkolben 28 in einer Lage, die zwischen der ersten vorbestimmten Lage und der zweiten vorbestimmten Lage ist, so ist die Schieberöffnung 36 freigeschaltet, so dass, wenn das zweite Auf-Zu-Ventil 40 in Offenstellung ist, die Federzusatzkammer 26 mit der Hauptkammer 24 federfluidleitend verbunden ist. Ist hingegen das zweite Auf-Zu-Ventil 40 in Geschlossenstellung, so kann eine federfluidleitende Verbindung zwischen der Hauptkammer 24 und der Federzusatzkammer 26 via das Rückschlagventil 42 hergestellt sein, wenn der Druck des Federfluids, das in der Federzusatzkammer 26 sich befindet, höher ist als der Druck des Federfluids, das in der Hauptkammer 24 sich befindet. Dann wird das Rückschlagventil 42 in Offenstellung gebracht, wodurch sich ein Druckausgleich zwischen der Hauptkammer 24 und der Federzusatzkammer 26 einstellt. Die Wirkung der Schalteinrichtung 34 ist durch die Offenstellung des Auf-Zu-Ventils 33 neutralisiert.

Gemäß Figuren 4 bis 7 weist die automatische Schalteinrichtung 34 einen Kranz 43 auf, der den Schieber 35 und die Schieberkupplung 39 bildet. Der Kranz ist auf der Seite des Trennkolbens 28 konzentrisch angebracht, die der Ausgleichskammer 29 zugewandt ist. An dem dem Trennkolben 28 abgewandten Längsende des Kranzes 43 ist eine umlaufende Wulst 44 vorgesehen, die an dem Kranz radial innenseitig als auch außenseitig vorsteht. In den Kranz 43 ragend und konzentrisch angeordnet ist ein Stab 45 vorgesehen, der in dem Ausgleichszylinder 27 gehalten ist. Der Stab 45 erstreckt sich in Richtung zu dem Trennkolben 28 und mit seiner freiliegenden Stabspitze 46 in den Kranz 43 jenseits der Wulst 44 hinein. Im Bereich der Wulst 44 ist an der Oberfläche des Stabs 45 eine umlaufende Rille 47 vorgesehen, die axial am Stab 45 von einer ersten Rillenkante 48 und einer zweiten Rillenkante 49 begrenzt ist. Um den Stab 45 ist ein Ringraum 50 gebildet, der von einem Gleitzylinder 51 begrenzt ist. Der Ringraum 50 ist mit der Hauptkammer 24 federfluidleitend verbunden und dadurch von der Ausgleichskammer 29 abgedichtet, indem die Wulst 44 an der Innenseite des Gleitzylinders 51 anliegt. Bei einer Verschiebebewegung des Trennkolbens 28 in dem Ausgleichszylinder 27 streift die Wulst 44 an dem Gleitzylinder 51 entlang, wobei die Ausgleichskammer 29, in der Dämpferfluid sich befindet, von dem Ringraum 50, in dem Federfluid sich befindet, abgedichtet sind.

Die Wulst 44 und die Rille 47 sind derart dimensioniert, dass, wenn die Wulst 44 auf Höhe der Rille 47 angeordnet ist, die Wulst 44 von dem Stab 45 im Abstand angeordnet ist, so dass an der Wulst 44 vorbei und durch die Rille 47 eine Passage von dem Ringraum 50 zu der Federzusatzkammer 26 freigelegt ist. Die Wulst 44 überstreift die erste Rillenkante 46, wenn der Trennkolben sich in der zweiten vordefinierten Lage befindet, und die Wulst 44 überstreift die zweite Rillenkante 49, wenn der Trennkolben 28 sich in der ersten vordefinierten Lage befindet. Dadurch ist die Passage zwischen dem Ringraum 50 und der Federzusatzkammer 26 freigelegt, wenn die Wulst zwischen den Rillenkanten 48, 49 angeordnet ist, und versperrt, wenn die Wulst 44 außerhalb der Rille 47, das heißt, jenseits der Rillenkanten 48, 49, angeordnet ist, wobei die Wulst 44 an dem Stab 45 dicht anliegt.

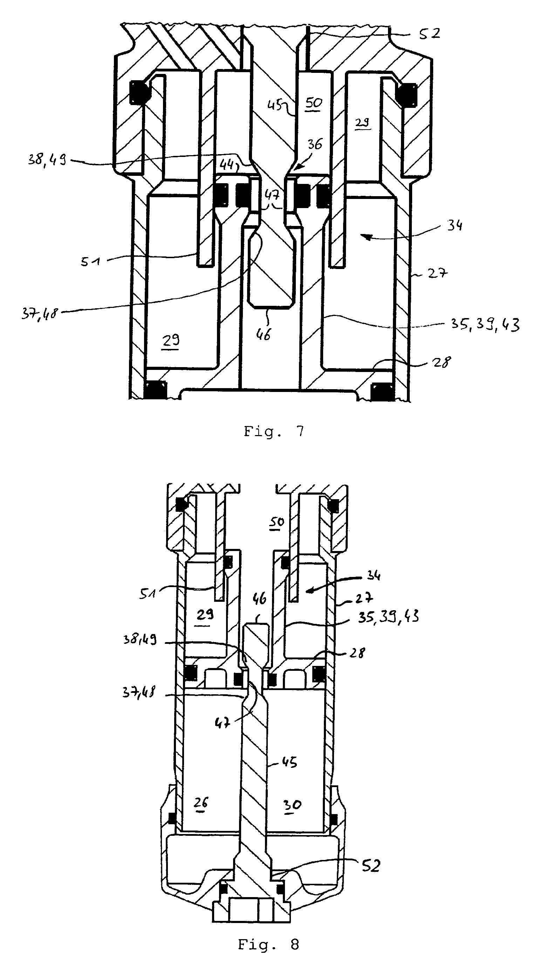

In Figur 8 ist eine zu Figur 7 alternative Ausführungsform der Schalteinrichtung 34 gezeigt, wobei der Stift 45 in der Druckkammer 30 sich erstreckt. Gemäß Figuren 7 und 8 ist der Stab 45 längsschiebar in einem Stabsitz 52 gehalten, so dass durch eine entsprechend gewählte Position des Stabs und die sich daraus ergebende Lage der Rillenkanten 48 und 49 die erste vordefinierte Lage und die zweite vordefinierte Lage des Trennkolbens 28 variabel einstellbar sind.

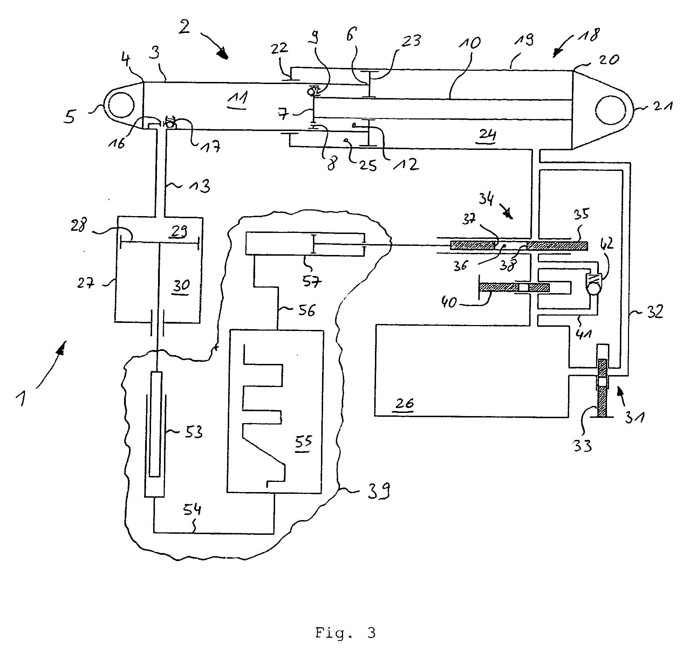

Gemäß Figur 3 weist die Schieberkupplung 39 einen Positionssensor 53 auf, der mit dem Trennkolben 28 mechanisch gekuppelt ist. In Abhängigkeit der Lage des Trennkolbens 28 ist der Positionssensor 53 betätigt, der die Lage des Trennkolbens 28 in ein elektrisches Signal umwandelt, das von einer ersten Signalleitung 54 an eine Signalverarbeitungseinheit 55 geleitet wird. In der Signalverarbeitungseinheit 55 ist das Signal verarbeitbar und wird als Gebersignal in einer zweiten Signalleitung 56 an einen Aktuator 57 gegeben, mit dem die automatische Schalteinrichtung 34 betätigbar ist.

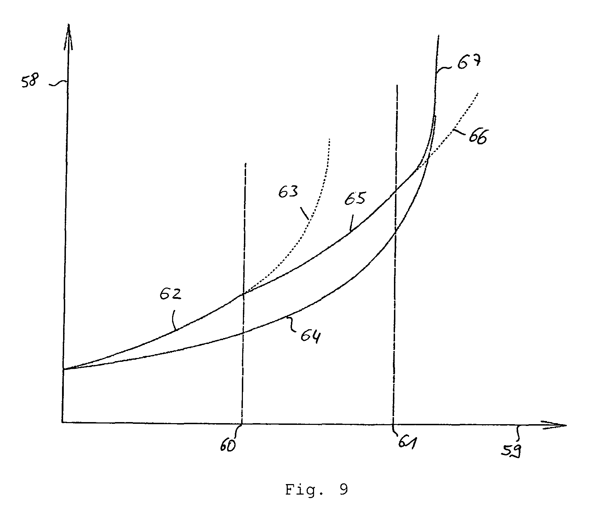

In Figur 9 ist eine Kennlinie des Federbeins 1 gezeigt, wobei in dem Diagramm eine Federkraft 58 über einen Einfederweg 59 aufgetragen ist. Ist das Federbein 1 entsprechend eingefedert, so dass der Trennkolben 28 sich in der ersten vordefinierten Lage befindet, so befindet sich die Schalteinrichtung 34 in einer ersten Schaltstellung 60, und ist das Federbein 1 derart eingefedert, dass der Trennkolben 28 sich in der zweiten vordefinierten Lage befindet, so ist die automatische Schalteinrichtung 34 in einer zweiten Schaltstellung 61. Zwischen der ersten Schaltstellung 60 und der zweiten Schaltstellung 61 ist die Federzusatzkammer 26 mit der Hauptkammer 24 federfluidleitend verbindbar.

Sind das erste Auf-Zu-Ventil 33 und das zweite Auf-Zu-Ventil 40 jeweils in Geschlossenstellung, so ist zum Einfedern der Gasdruckfeder 18 die Hauptkammer 24 von der Federzusatzkammer 26 stets getrennt. Somit wirkt zum Einfedern der Gasdruckfeder 18 lediglich die Hauptkammer 24, woraus sich die ersten Kennlinienabschnitte 62 und 63 ergeben. Ist hingegen das erste Auf-Zu-Ventil 33 in Offenstellung, so wirken die Hauptkammer 24 und die Federzusatzkammer 26 zusammen, so dass sich ein dritter Kennlinienabschnitt 64 ergibt, der einen weniger steilen Verlauf hat, als die Kennlinienabschnitte 62, 63. Die Kennlinienabschnitte 63, 64 haben einen progressiven Verlauf. Ist das erste Auf-Zu-Ventil 33 in Geschlossenstellung und das zweite Auf-Zu-Ventil 40 in Offenstellung, so ist bei einem Federweg des Federbeins 1, der zwischen der ersten Schaltstellung 60 und der zweiten Schaltstellung 61 liegt, die Hauptkammer 24 mit der Federzusatzkammer 26 federfluidleitend verbunden, und, ist der Federweg kleiner als die erste Schaltstellung 60 oder größer als die zweite Schaltstellung 61, die Hauptkammer 24 von der Federzusatzkammer 26 federfluidisoliert. Dadurch ergibt sich eine Kennlinie, die aus dem ersten Kennlinienabschnitt 62, einem vierten Kennlinienabschnitt 65 und einem sechsten Kennlinienabschnitt 67 zusammengesetzt ist. Der vierte Kennlinienabschnitt 65 ist analog zum dritten Kennlinienabschnitt 64 und der sechste Kennlinienabschnitt 67 ist analog zum zweiten Kennlinienabschnitt 63. Wäre die zweite Schaltstellung 61 in Fig. 9 weiter nach rechts verlegt, so würde ein Trennen der Federzusatzkammer 26 von der Hauptkammer 24 nicht erfolgen und der vierte Kennlinienabschnitt 65 hätte als ein fünfter Kennlinienabschnitt 66 einen flacheren Verlauf als der Kennlinienabschnitt 67.

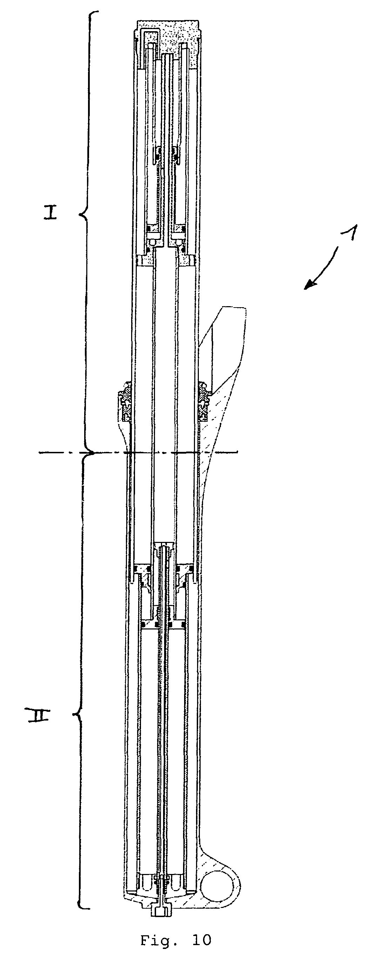

Die in Figuren 10 bis 12 gezeigte Ausführungsform des Federbeins 1 ist für den Einbau in eine Federgabel eines Fahrrads zum Abstützen eines vorderen Laufrads geeignet. Die Schalteinrichtung 34 weist eine Hülse 68 auf, an der innenliegend eine umlaufende Stufe 69 ausgebildet ist. Die Stufe 69 bildet axial gesehen den zweiten Schieberöffnungsrand 38, wobei die Hülse 68 verjüngt ausgebildet ist. Ferner weist das den Trennkolben 28 abgewandte Ende des Kranzes 43 eine umlaufende Wulst 44 auf, die radial federfluiddicht an der Hülse 68 anliegt, wenn in einer momentanen Lage des Trennkolbens 28 die Wulst 44 diesseits der Stufe 69 angeordnet ist. Ferner, wenn bei einer momentanen Lage des Trennkolbens 28 die Wulst 44 jenseits der Stufe 69 angeordnet ist, ist die Wulst 44 von der Hülse 68 im Radialabstand angeordnet, so dass die Wulst 44 mit der Hülse 88 eine Passage bildet, wodurch die Hauptkammer 24 mit der Federzusatzkammer 26 federfluidleitend verbunden ist.

### Bezugszeichenliste

1 hydropneumatisches Federbein
2 Stoßdämpfer
3 Dämpferzylinder
4 Dämpferzylinderkopf
5 Laufradauge
6 Dämpferzylinderrand
7 Dämpferkolben
8 Durchlass
9 Dämpferkolbenrückschlagventil
10 Dämpferkolbenstange
11 Arbeitskammer
12 Gegenkammer
13 Ausgleichsleitung
14 Dämpferkolbenstangenrohr
15 Ausgleichskanal
16 Ausgleichsblende
17 Ausgleichsrückschlagventil
18 Gasdruckfeder
19 Federzylinder
20 Federzylinderkopf
21 Rahmenauge
22 Federzylinderabdichtung
23 Federkolben
24 Hauptkammer
25 Negativkammer
26 Federzusatzkammer
27 Ausgleichszylinder
28 Trennkolben
29 Ausgleichskammer
30 Druckkammer
31 manuelle Schalteinrichtung
32 erste Verbindungsleitung
33 erstes Auf-Zu-Ventil
34 automatische Schalteinrichtung
35 Schieber
36 Schieberöffnung
37 erster Schieberöffnungsrand
38 zweiter Schieberöffnungsrand
39 Schieberkupplung
40 zweites Auf-Zu-Ventil
41 Umgehungsleitung
42 Rückschlagventil
43 Kranz
44 Wulst
45 Stab
46 Stabspitze
47 Rille
48 erste Rillenkante
49 zweite Rillenkante
50 Ringraum
51 Gleitzylinder
52 Stabsitz
53 Positionssensor
54 erste Signalleitung
55 Signalverarbeitungseinheit
56 zweite Signalleitung
57 Aktuator
58 Federkraft
59 Einfederweg
60 erste Schaltstellung
61 zweite Schaltstellung
62 erster Kennlinienabschnitt
63 zweiter Kennlinienabschnitt
64 dritter Kennlinienabschnitt
65 vierter Kennlinienabschnitt
66 fünfter Kennlinienabschnitt
67 sechster Kennlinienabschnitt
68 Hülse
69 Stufe

## Patentansprüche

1. Hydropneumatisches Federbein für ein Fahrrad, mit einem Stoßdämpfer (2), der einen mit einem inkompressiblen Dämpferfluid gefüllten Dämpferzylinder (3), einen in diesem verschiebbar angeordneten Dämpferkolben (7) und eine Dämpferkolbenstange (10) aufweist, mit der der Dämpferkolben (7) von außerhalb des Dämpferzylinders (3) betätigbar ist, einer Gasdruckfeder (18) aufweisend einen Federzylinder (19), der mit einem kompressiblen Federfluid gefüllt ist sowie einen in dem Federzylinder (19) verschiebbar angeordneten Federkolben (23) aufweist, wobei der Stoßdämpfer (2) und die Gasdruckfeder (18) parallel zueinander geschaltet sind und beim Einfedern und Ausfedern des Federbeins (1) der Stoßdämpfer (2) und die Gasdruckfeder (18) teleskopartig ineinander verfahrbar sind, einem mit dem Dämpferzylinder (3) dämpferfluidleitend verbunden und zum Volumenausgleich von einer zeitlich variablen Verdrängung des Dämfungsfluids durch die Dämpfungskolbenstange (10) beim Einfedern und Ausfedern des Federbeins (1) vorgesehenen Ausgleichsbehälter (27) mit einer Ausgleichskammer (29), die mit einem verschiebbaren Trennelement (28) abgegrenzt ist, mit dem durch dessen Verschiebung der Volumenausgleich bewerktstelligbar ist, **dadurch gekennzeichnet, dass** das hydropneumatische Federbein eine mit dem Federfluid gefüllte Federzusatzkammer (26), eine Schalteinrichtung (34) und eine Kupplung (39) aufweist, mit der die Schalteinrichtung (34) mit dem Trennelement (28) gekuppelt ist, dass, wenn das Trennelement (28) in einem Lagebereich zwischen einer ersten vorbestimmten Lage und einer zweiten vorbestimmten Lage angeordnet ist, die Federzusatzkammer (26) mit dem Federzylinder (19) federfluidleitend verbunden ist und, wenn das Trennelement (28) außerhalb des Lagebereichs angeordnet ist, die Federzusatzkammer (26) von dem Federzylinder (19) federfluidisoliert ist.

2. Federbein gemäß Anspruch 1, wobei der Ausgleichsbehälter (27) neben der Ausgleichskammer (29) eine mit dem Federfluid gefüllte Druckkammer (30) aufweist, die die Federzusatzkammer (26) bildet und von der Ausgleichskammer (29) mit dem Trennelement (28) in dem Ausgleichsbehälter (27) abgetrennt ist.

3. Federbein gemäß Anspruch 1 oder 2, wobei die Schalteinrichtung (34) ein Auf-Zu-Ventil (40), mit dem die Federzusatzkammer (26) von dem Federzylinder (19) in der ZuStellung federfluidisolierbar ist, und eine das Auf-Zu-Ventil (40) umgehenden Umgehungsleitung (41) mit einem Rückschlagventil (42) aufweist, dessen Durchlassrichtung in Strömungsrichtung von der Federzusatzkammer (26) zu dem Federzylinder (19) ist.

4. Federbein gemäß einem der Ansprüche 1 bis 3, wobei die Kupplung (39) einen Positionssensor (53) zum Erfassen der momentanen Lage des Trennelements (28) und einen von dem Positionssensor (53) angesteuerten Aktuator (57) aufweist, mit dem die Schalteinrichtung (34) antreibbar ist.

5. Federbein gemäß einem der Ansprüche 1 bis 3, wobei die Kupplung (39) ein starres, an dem Trennelement (28) befestigtes Verbindungselement (43) zum starren Kuppeln der Schalteinrichtung (34) mit dem Trennelement (28) ist.

6. Federbein gemäß Anspruch 5, wobei die Schalteinrichtung (34) ein Schieber (35) mit einer Schieberöffnung (36) ist, die einen ersten Öffnungsrand (37) und einen zweiten Öffnungsrand (38) aufweist, deren Positionen den Lagebereich definieren, wobei mit der freigelegten Schieberöffnung (36) die Federzusatzkammer (26) mit dem Federzylinder (19) federfluidleitend verbunden ist und mit der überdeckten Schieberöffnung (36) die Federzusatzkammer (26) von dem Federzylinder (19) federfluidisoliert ist.

7. Federbein gemäß Anspruch 6, wobei der Ausgleichsbehälter ein Ausgleichszylinder (27) und das Trennelement ein Trennkolben (28) ist, der in dem Ausgleichszylinder (27) verschiebbar schwimmend gelagert ist.

8. Federbein gemäß Anspruch 7, wobei die Kupplung (39) ein hohlzylindrischer Kranz (43) ist, der konzentrisch an dem Trennkolben (28) befestigt ist und in die Ausgleichskammer (29) sich erstreckt, wobei in der Ausgleichskammer (29) ein Gleitzylinder (51) vorgesehen ist, der konzentrisch um den Kranz (43) angeordnet ist, der in Längsrichtung des Trennkolbens (28) an dem Gleitzylinder (51) federfluiddicht anliegend längsversschiebbar ist, so dass in dem Ausgleichszylinder (27) die Ausgleichskammer (29) ringförmig um den Kranz (43) und den Gleitzylinder (51) ausgebildet ist.

9. Federbein gemäß Anspruch 8, wobei der Trennkolben (28) mittig einen Längsdurchgang aufweist und der Innenraum (50) des Gleitzylinders (51) mit dem Federzylinder (19) federfluidleitend verbunden ist, so dass die Druckkammer (26) mit dem Federzylinder (19) via den Kranz (43) und den Gleitzylinder (51) federfluidleitend verbunden ist.

10. Federbein gemäß Anspruch 9, wobei die Schalteinrichtung (34) einen Stab (45), an dem als die Schieberöffnung (36) eine umlaufende Rille (47) angebracht ist, die axial gesehen von einer den ersten Schieberöffnungsrand (37) bildenden ersten Rillenkante (48) und einer den zweiten Schieberöffnungsrand (38) bildenden zweiten Rillenkante (49) begrenzt ist, und das dem Trennkolben (28) abgewandte Ende des Kranzes (43) eine umlaufende Wulst (44) aufweist, die, wenn aufgrund einer momentanen Lage des Trennkolbens (28) die Wulst (44) außerhalb der Rille (47) angeordnet ist, radial federfluiddicht an dem Stab (45) anliegt und, wenn aufgrund einer momentanen Lage des Trennkolbens (28) die Wulst (44) an der Rille (47) angeordnet ist, von dem Stab (45) im Radialabstand angeordnet ist, so dass die Wulst (44) mit der Rille (47) derart zusammenwirkt, dass von den Rillenkannten (48, 49) der Lagebereich definiert ist.

11. Federbein gemäß Anspruch 10, wobei der Stab (45) längsverschiebbar ist, wodurch der Lagebereich durch die gewählte Position des Stabs (45) einstellbar ist.

12. Federbein gemäß Anspruch 9, wobei die Schalteinrichtung (34) eine Hülse (68), an der innenseitig eine umlaufende Stufe (69) ausgebildet ist, die axial gesehen den zweiten Schieberöffnungsrand (38) bildet, wodurch die Hülse (68) verjüngt ist, und das dem Trennkolben (28) abgewandte Ende des Kranzes (43) eine umlaufende Wulst (44) aufweist, die, wenn aufgrund einer momentanen Lage des Trennkolbens (28) die Wulst (44) diesseits der Stufe (69) angeordnet ist, radial federfluiddicht an der Hülse (69) anliegt und, wenn aufgrund einer momentanen Lage des Trennkolbens (28) die Wulst (44) jenseits der Stufe (69) angeordnet ist, von der Hülse (68) im Radialabstand angeordnet ist, so dass die Wulst (47) mit der Hülse (68) derart zusammenwirkt, dass von der Stufe (69) der Lagebereich definiert ist.

13. Federbein gemäß einem der Ansprüche 1 bis 12, wobei der Federzylinder (19) von dem Federkolben (23) in eine Negativkammer (25) und eine Hauptkammer (24) geteilt ist, die mit der Federzusatzkammer (26) via die Schalteinrichtung (34) federfluidleitend verbunden ist.

14. Federbein gemäß einem der Ansprüche 1 bis 13, wobei der Dämpferzylinder (3) von dem Dämpferkolben (10) in eine Gegenkammer (12) und eine Arbeitskammer (11) geteilt ist, die mit dem Ausgleichsbehälter (27) federfluidleitend verbunden ist.

15. Federbein gemäß Anspruche 14, wobei der Dämpferkolben (7) ein Dämpferkolbenrückschlagventil (9) aufweist, das beim Einfedern des Federbeins (1) in Offenstellung und beim Ausfedern des Federbein (1) in Geschlossenstellung gebracht ist.

16. Federbein gemäß Anspruch 14 oder 15, wobei der Dämpferzylinder (3) an der Verbindung der Arbeitskammer (11) zum Ausgleichsbehälter (27) ein Ausgleichsrückschlagventil (17) aufweist, das beim Einfedern des Federbeins (1) in Geschlossenstellung und beim Ausfedern des Federbein (1) in Offenstellung gebracht ist.

## Claims

1. Hydropneumatic telescopic strut for a bicycle, with a shock absorber (2) that comprises a damper cylinder (3) filled with an incompressible damper fluid, a damper piston (7) arranged such that it can be displaced in said damper cylinder (3) and a damper piston rod (10) with which the damper piston (7) can be operated from outside the damper cylinder (3); a gas pressure spring (18) that comprises a spring cylinder (19) filled with a compressible spring fluid and a spring piston (23) arranged such that it can be displaced in the spring cylinder (19), wherein the shock absorber (2) and the gas pressure spring (18) are connected in parallel with one another and the shock absorber (2) and the gas pressure spring (18) can be telescoped upon spring deflection and rebound of the telescopic strut (1); an equalization reservoir (27) with an equalization chamber (29), which equalization reservoir (27) is connected with the damper cylinder (3) such that the damper fluid can be conducted and is provided for volume equalization of a time-variable displacement of the damper fluid by the damper piston rod (10) upon spring deflection and rebound of the telescopic strut (1), with the equalization chamber (29) that is delimited with a displaceable separator element (28) with which the volume equalization can be accomplished via displacement of said separator element (28), **characterized in that** the hydropneumatic telescopic strut comprises an auxiliary spring chamber (26) filled with the spring fluid; a switching device (34); and a coupling (39) with which the switching device (34) is coupled with the separator element (28) such that the auxiliary spring chamber (26) is connected with the spring cylinder (19) that spring fluid can be conducted if the separator element (28) is arranged in a position range between a first predetermined position and a second predetermined position, and the auxiliary spring chamber (26) is isolated in terms of spring fluid from the spring cylinder (29) if the separator element (28) is arranged outside of the position range.

2. Telescopic strut according to Claim 1, wherein the equalization reservoir (27) comprises a pressure chamber (30) filled with the spring fluid in addition to the equalization chamber (29), which pressure chamber (30) forms the auxiliary spring chamber (26) and is separated off from the equalization chamber (29) in the equalization reservoir (27) with the separator element (28).

3. Telescopic strut according to Claim 1 or 2, wherein the switching device (34) comprises a two-position valve (40) with which the auxiliary spring chamber (26) can be isolated in terms of spring fluid from the spring cylinder (19) in the closed position; and a shunt line (41) with nonreturn valve (42) circumventing the two-position valve (40), the transmission direction of which nonreturn valve (42) is in the flow direction from the auxiliary spring chamber (26) to the spring cylinder (19).

4. Telescopic strut according to any of the Claims 1 through 3, wherein the coupling (39) comprises a position sensor (53) to detect the current position of the separator element (28) and an actuator (57) activated by the position sensor (53), with which actuator the switching device (34) can be driven.

5. Telescopic strut according to any of the Claims 1 through 3, wherein the coupling (39) is a rigid connection element (43) attached to the separator element (28) for a rigid coupling of the switching device (34) with said separator element (28).

6. Telescopic strut according to Claim 5, wherein the switching device (34) is a slider (35) with a slider opening (36) that comprises a first opening edge (37) and a second opening edge (38) whose positions define the position range, wherein with the uncovered slider opening (36) the auxiliary spring chamber (26) is connected with the spring cylinder (19) such that spring fluid can be conducted, and with the covered slider opening (36) the auxiliary spring chamber (26) is isolated in terms of spring fluid from the spring cylinder (19).

7. Telescopic strut according to Claim 6, wherein the equalization reservoir is an equalization cylinder (27) and the separator element is a floating piston (28) that is borne floating in the equalization cylinder (27) such that it can be displaced.

8. Telescopic strut according to Claim 7, wherein the coupling (39) is a hollow cylindrical collar (43) that is concentrically attached to the floating piston (28) and extends into the equalization chamber (29), wherein in the equalization chamber (29) a sliding cylinder (51) is provided that is arranged concentrically around the collar (43), which is arranged such that it can be displaced in the longitudinal direction of the floating piston (28) and adjoins the sliding cylinder (51) such that it a spring fluid seal is formed, such that in the equalization cylinder (27) the equalization chamber (29) is fashioned annularly around the collar (43) and the sliding cylinder (51).

9. Telescopic strut according to Claim 8, wherein the telescopic strut (28) comprises a central longitudinal passage, and the inner space (50) of the sliding cylinder (51) is connected in a spring fluid-conductive manner with the spring cylinder (19) such that the pressure chamber (26) is connected in a spring fluid-conductive manner with the spring cylinder (19) via the collar (43) and the sliding cylinder (51).

10. Telescopic strut according to Claim 9, wherein the switching device (34) comprises a rod (45) on which is mounted a circumferential groove (47) as the slider opening (36), which groove (47) is bounded (when viewed axially) by a first groove edge (48) forming the first slider opening border (37) and a second groove edge (49) forming the second slider opening border (38), and the end of the collar (43) facing away from the floating piston (28) comprises a circumferential bead (44) that radially adjoins the rod (45) such that a spring fluid seal is formed if the bead (44) is arranged outside of the groove (47) due to a current position of the floating piston (28); and said circumferential bead (44) is arranged at a radial distance from the rod (45) if the bead (44) is arranged at the groove (47) due to a current position of the floating piston (28); such that the bead (44) interacts with the groove (47) such that the position range is defined by the groove edges (48, 49).

11. Telescopic strut according to Claim 10, wherein the rod (45) can be displaced longitudinally, whereby the position range can be adjusted via the selected position of the rod (45).

12. Telescopic strut according to Claim 9, wherein the switching device (34) comprises a bushing (68) at which a circumferential step (69) is fashioned on the inside that, viewed axially, forms the second slider opening border (38), whereby the bushing (68) is tapered and the end of the collar (43) that faces away from the floating piston (28) comprises a circumferential bead (44) that radially adjoins the bushing (69) such that a spring fluid seal is formed if the bead (44) is arranged on this side of the step (69) due to the current position of the floating piston (28); and said bead (44) is arranged at a radial distance from the bushing (68) if the bead (44) is arranged on the other side of the step (69) due to a current position of the floating piston (28); such that the bead (47) interacts with the bushing (47) such that the position range is defined by the step (69).

13. Telescopic strut according to any of the Claims 1 through 12, wherein the spring cylinder (19) is divided by the spring piston (23) into a negative chamber (25) and a primary chamber (24) that is connected with the auxiliary spring chamber (26) via the switching device (34) such that spring fluid can be conducted.

14. Telescopic strut according to any of the Claims 1 through 13, wherein the damper cylinder (3) is divided by the damper piston (10) into a counter-chamber (12) and a work chamber (11) that is connected with the equalization reservoir (27) such that spring fluid can be conducted.

15. Telescopic strut according to Claim 14, wherein the damper piston (7) comprises a damper piston nonreturn valve (9) that is brought into an open position upon spring deflection of the telescopic strut (1) and is brought into a closed position upon rebound of the telescopic strut (1).

16. Telescopic strut according to Claim 14 or 15, wherein the damper cylinder (3) comprises an equalization nonreturn valve (17) at the connection of the work chamber (11) with the equalization reservoir (27), which equalization nonreturn valve (17) is brought into the closed position upon spring deflection of the telescopic strut (1) and is brought into the open position upon rebound of the telescopic strut (1).

## Revendications

1. Jambe de suspension à force hydropneumatique pour un vélo, comprenant un absorbeur de chocs (2) qui présente un cylindre amortisseur (3) rempli d'un fluide amortissant incompressible, un piston amortisseur (7) agencé de façon coulissante dans celui-ci et une tige de piston amortisseur (10) au moyen de laquelle le piston amortisseur (7) peut être actionné depuis l'extérieur du cylindre amortisseur (3), un ressort à pression à gaz (18) qui présente un cylindre de suspension (19) qui est rempli d'un fluide de suspension compressible et qui présente un piston de suspension (23) agencé de façon coulissante dans le cylindre de suspension (19), l'absorbeur de chocs (2) et le ressort à pression à gaz (18) étant montés parallèlement l'un à l'autre, et lors du rabattement et du débattement de la jambe de suspension (1), l'absorbeur de chocs (2) et le ressort à pression à gaz (18) peuvent se déplacer l'un dans l'autre de façon télescopique, un réservoir de compensation (27) relié avec le cylindre amortisseur (3) de façon à conduire le fluide amortissant et prévu pour réaliser une compensation de volume d'une compression variable dans le temps du fluide amortissant par la tige de piston amortisseur (10) lors du rabattement et du débattement de la jambe de suspension (1) comprenant un compartiment de compensation (29) qui est délimité par un élément de séparation coulissant (28) au moyen duquel la compensation du volume peut être mise en oeuvre, en le faisant coulisser, **caractérisée en ce que** la jambe de suspension à force hydropneumatique comprend un compartiment de suspension complémentaire (26) rempli du fluide de suspension, un dispositif de commutation (34) et un coupleur (39) au moyen duquel le dispositif de commutation (34) est couplé avec l'élément de séparation (28) et **en ce que** lorsque l'élément de séparation (28) est agencé dans une zone de position entre une première position prédéterminée et une deuxième position prédéterminée, le compartiment de suspension complémentaire (26) est relié au cylindre de suspension (19) de façon à conduire le fluide de suspension, et lorsque l'élément de séparation (28) est agencé en dehors de ladite zone de position, le compartiment de suspension complémentaire (26) est isolé du cylindre de suspension (19) au niveau du fluide de suspension.

2. Jambe de suspension selon la revendication 1, dans laquelle le réservoir de compensation (27) comprend, outre le compartiment de compensation (29), un compartiment de pression (30) rempli du fluide de suspension qui forme le compartiment de suspension complémentaire (26) et qui est séparé du compartiment de compensation (29) dans le réservoir de compensation (27) par l'élément de séparation (28).

3. Jambe de suspension selon la revendication 1 ou 2, dans laquelle le dispositif de commutation (34) comprend un clapet à deux paliers (40), au moyen duquel le compartiment de suspension complémentaire (26) peut être isolé du cylindre de suspension (19) au niveau du fluide de suspension dans la position fermée, et une conduite de dérivation (41) contournant le clapet à deux paliers (40) comprenant un clapet antiretour (42), dont le sens de conduction s'étend dans le sens de la circulation depuis le compartiment de suspension complémentaire (26) vers le cylindre de suspension (19).

4. Jambe de suspension selon l'une des revendications 1 à 3, dans laquelle le coupleur (39) comprend un capteur de position (53) destiné à déterminer la position momentanée de l'élément de séparation (28) et un actionneur (57) commandé par le capteur de position (53) au moyen duquel le dispositif de commutation (34) peut être entraîné.

5. Jambe de suspension selon l'une des revendications 1 à 3, dans laquelle le coupleur (39) est un élément de raccord (43) immobile fixé sur l'élément de séparation (28) destiné à coupler le dispositif de commutation (34) avec l'élément de séparation (28) en position fixe.

6. Jambe de suspension selon la revendication 5, dans laquelle le dispositif de commutation (34) est un curseur (35) comprenant une ouverture de curseur (36) qui présente un premier bord d'ouverture (37) et un deuxième bord d'ouverture (38) dont les positions définissent la zone de position, étant entendu que le compartiment de suspension complémentaire (26) est relié avec le cylindre de suspension (19) de façon à conduite le fluide de suspension au moyen de l'ouverture de curseur (36) dégagée et que le compartiment de suspension complémentaire (26) est isolé du cylindre de suspension (19) au niveau du fluide de suspension au moyen de l'ouverture de curseur (36) recouverte.

7. Jambe de suspension selon la revendication 6, dans laquelle le réservoir de compensation est un cylindre de compensation (27) et l'élément de séparation un piston de séparation (28) qui est disposé de façon coulissante et flottante dans le cylindre de compensation (27).

8. Jambe de suspension selon la revendication 7, dans laquelle le coupleur (39) est une couronne cylindrique creuse (43) qui est fixée en position concentrique sur le piston de séparation (28) et qui s'étend dans le compartiment de compensation (29), étant entendu qu'il est prévu dans le compartiment de compensation (29) un cylindre glissant (51) qui est agencé en position concentrique autour de la couronne (43), qui peut coulisser de façon longitudinale et étanche au fluide de suspension en position adjacente au cylindre glissant (51) dans le sens longitudinal du piston de séparation (28) de telle sorte que le compartiment de compensation (29) est réalisé dans une forme annulaire autour de la couronne (43) et du cylindre glissant (51) dans le cylindre de compensation (27).

9. Jambe de suspension selon la revendication 8, dans laquelle le piston de séparation (28) présente en son centre un passage longitudinal et l'espace intérieur (50) du cylindre glissant (51) est relié avec le cylindre de suspension (19) de façon à conduire le fluide de suspension de telle sorte que le compartiment de pression (26) est relié avec le cylindre de suspension (19) par l'intermédiaire de la couronne (43) et du cylindre glissant (51) de façon à conduire le fluide de suspension.

10. Jambe de suspension selon la revendication 9, dans laquelle le dispositif de commutation (34) comprend une barre (45) sur laquelle une rainure périphérique (47) est réalisée en tant que l'ouverture de curseur (36), qui vue dans le sens axial, est délimitée par une première arête de rainure (48) formant le premier bord de l'ouverture de curseur (37) et une deuxième arête de rainure (49) formant le deuxième bord de l'ouverture du curseur (38) et l'extrémité de la couronne (43) située en opposition au piston de séparation (28) présente un renflement périphérique (44), qui lorsque le renflement (44) est situé en dehors de la rainure (47) en raison d'une position momentanée du piston de séparation (28), prend appui sur la barre (45) en position radiale de façon étanche au fluide de suspension, et lorsque le renflement (44) est situé dans la rainure (47) en raison d'une position momentanée du piston de séparation (28), est agencé avec un écartement radial par rapport à la barre (45), de telle sorte que le renflement (44) coopère avec la rainure (47) de telle sorte que la zone de position est définie par les arêtes de la rainure (48, 49).

11. Jambe de suspension selon la revendication 10, dans laquelle la barre (45) peut coulisser dans le sens longitudinal, de sorte que la zone de position peut être réglée par la position choisie de la barre (45).

12. Jambe de suspension selon la revendication 9, dans laquelle le dispositif de commutation (34) comprend un manchon (68) dans lequel un épaulement périphérique (69) est formé sur le côté intérieur, qui vu dans le sens axial, forme le deuxième bord de l'ouverture de curseur (38), de sorte que le manchon (68) est raccourci, et l'extrémité de la couronne (43) située en opposition au piston de séparation (28) présente un renflement périphérique (44), qui lorsque le renflement (44) est situé de ce côté de l'épaulement (69) en raison d'une position momentanée du piston de séparation (28), prend appui sur le manchon (68) en position radiale de façon étanche au fluide de suspension, et lorsque le renflement (44) est situé de l'autre côté de l'épaulement (69) en raison d'une position momentanée du piston de séparation (28), est agencé avec un écartement radial par rapport au manchon (68), de telle sorte que le renflement (44) coopère avec le manchon (68) de telle sorte que la zone de position est définie par l'épaulement (69).

13. Jambe de suspension selon l'une des revendications 1 à 12, dans laquelle le cylindre de suspension (19) est partagé par le piston de suspension (23) entre un compartiment négatif (25) et un compartiment principal (24) qui est relié avec le compartiment de suspension complémentaire (26) par l'intermédiaire du dispositif de commutation (34) de façon à conduire le fluide de suspension.

14. Jambe de suspension selon l'une des revendications 1 à 13, dans laquelle le cylindre amortisseur (3) est partagé par le piston amortisseur (10) entre un compartiment inverse (12) et un compartiment de travail (11) qui est relié avec le réservoir de compensation (27) de façon à conduire le fluide de suspension.

15. Jambe de suspension selon la revendication 14, dans laquelle le piston amortisseur (7) présente un clapet antiretour de piston amortisseur (9) qui est amené dans la position ouverte lors du rabattement de la jambe de suspension (1) et dans la position fermée lors du débattement de la jambe de suspension (1).

16. Jambe de suspension selon la revendication 14 ou 15, dans laquelle le cylindre amortisseur (3) présente, au raccord du compartiment de travail (11) avec le réservoir de compensation (27), un clapet antiretour de compensation (17) qui est amené dans la position fermée lors du rabattement de la jambe de suspension (1) et dans la position ouverte lors du débattement de la jambe de suspension (1).
